# EUROPEAN PATENT APPLICATION

(11) **EP 4 629 473 A1**
(43) Date of publication of application: **08.10.2025**
(21) Application number: 23897301.0
(22) Date of filing: 20.10.2023
(51) Int. Cl.: H02J 7/00, H01M 10/44, H01M 10/48, H01M 50/284, H01M 50/569

(54) **BATTERY PACK**

(30) Priority: 30.11.2022 JP 2022191569
(71) Applicant: Panasonic Energy Co., Ltd., Osaka 570-8511 (JP)
(72) Inventor: MORIMOTO, Tsuyoshi, Kadoma-shi, Osaka 571-0057 (JP)
(74) Representative: Novagraaf International SA
(86) International application number: PCT/JP2023/038033
(87) International publication number: WO 2024/116644

(57) **Abstract**

The battery pack shuts down the MPU to reduce unnecessary power consumption and also restores the MPU to an operational state. The battery pack is provided with a rechargeable battery, an AFE that detects battery voltage, an MPU connected to the AFE, a power circuit that outputs battery voltage converted to MPU operating voltage, and a control circuit that switches the power circuit ON and OFF. The control circuit controls the ON state of the power circuit based on signals input from either the AFE or the MPU, the control circuit is further provided with a startup terminal that switches the power circuit ON, and the control circuit switches the power circuit ON based on a signal from the startup terminal.

## Description

### TECHNICAL FIELD

The present invention relates to a battery pack provided with an AFE (Analog Front End) that detects battery information such as battery voltage, and an MPU (Micro-Processor Unit) connected to the AFE through communication circuitry, and in particular relates to a battery pack in which the battery supplies power to the AFE and the MPU.

### BACKGROUND ART

A battery pack that detects battery information such as battery voltage with an AFE, transmits the detected battery information from the AFE to an MPU, and controls battery charging and discharging via the MPU has been developed (Patent Literature 1).

### CITATION LIST

### PATENT LITERATURE

Patent Literature 1: Japanese Laid-Open Patent Publication JP 2006-143144

### SUMMARY OF INVENTION

### TECHNICAL PROBLEM

FIG. 4 is a circuit diagram showing the battery pack cited in Patent Literature 1. This battery pack 900 is provided with an AFE (Analog Front End) 902 housing an A/D converter that detects and digitizes battery 901 voltage and temperature, an MPU (Micro-Processor Unit) 903 connected to the AFE 902, an AFE power circuit 904a that supplies power to the AFE 902, an MPU power circuit 904b that supplies power to the MPU 903, and a power cut-off switch 905 connected between the battery 901 and the AFE power circuit 904a. When the battery pack 900 does not supply power to a load over an extended period, namely when the battery pack is not used for an extended period, the power cut-off switch 905 is switched OFF to suspend power supply to the AFE power circuit 904a. This reduces power consumption by the AFE 902 and the AFE power circuit 904a, and reduces battery 901 power consumption when the battery pack is not being used.

When not in use, the battery pack described above cuts off power to the AFE 902. In a battery pack that supplies power from the battery to both an AFE and MPU, power consumption in the unused state can be reduced by suspending power supplied to either the AFE or the MPU. Accordingly, unused battery pack power consumption can also be reduced by maintaining AFE operation while deactivating the MPU. A battery pack that maintains AFE operation and deactivates the MPU can still detect battery information even in the unused state. This improves safety, and in battery packs using a high power consumption MPU, significant power consumption reduction can be achieved in the unused state.

A battery pack that deactivates the MPU when not supplying power to a load during periods of non-use requires a power switch connected between the battery and the MPU power circuit. Here, the unused (out-of-use) condition must be detected and the power switch switched from the ON state to the OFF state. While the MPU can control the power switch to the OFF state to suspend power supply, once the MPU has been deactivated due to power supply cut off, it cannot switch the power switch back ON to restore its operational state.

The present invention was developed to resolve the drawbacks described above. One object of the present invention is to provide a battery pack that can reduce unnecessary power consumption by shutting down the MPU while allowing the MPU to be switched back ON to restore operation.

### SOLUTION TO PROBLEM

A battery pack for an embodiment of the present invention is provided with rechargeable batteries, an AFE (Analog Front End) that detects battery voltage, an MPU (Micro-Processor Unit) connected to the AFE, a power circuit that outputs battery voltage converted to MPU operating voltage, and a control circuit that switches the power circuit ON and OFF. The control circuit controls the ON state of the power circuit according to signals input from either the AFE or the MPU, the control circuit is also provided with a startup terminal, and the control circuit switches the power circuit ON based on a signal from the startup terminal.

### ADVANTAGEOUS EFFECTS OF INVENTION

The battery pack described above has the characteristic that unnecessary power consumption can be reduced by shutting down the MPU while making it possible to switch the MPU back to the ON state.

### BRIEF DESCRIPTION OF DRAWINGS

FIG. 1 is a circuit diagram of the battery pack for one embodiment of the present invention.
FIG. 2 is a circuit diagram of the battery pack for another embodiment of the present invention.
FIG. 3 is a circuit diagram of the battery pack for another embodiment of the present invention.

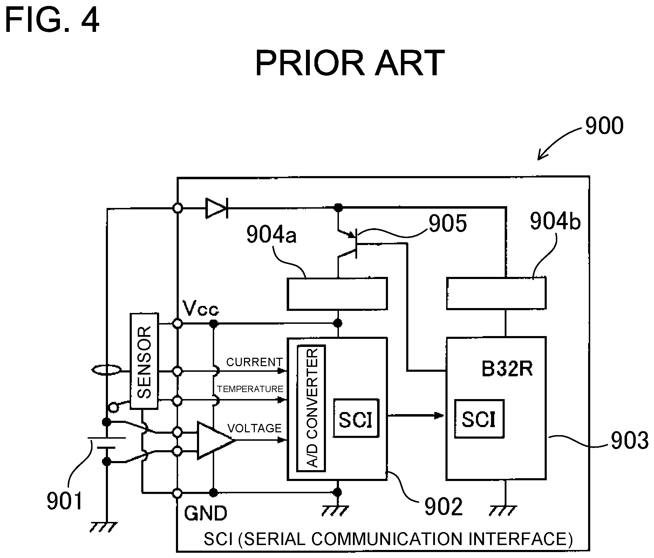

FIG. 4 is a circuit diagram of a prior art battery pack.

### DESCRIPTION OF EMBODIMENTS

Other Embodiments of the present invention may be identified by the following configurations and features.

A battery pack for one embodiment of the present invention is provided with, in addition to any of the foregoing embodiments, a battery that can be recharged, an AFE that detects battery voltage, an MPU connected to the AFE, a power circuit that outputs battery voltage converted to MPU operating voltage, and a control circuit that switches the power circuit ON and OFF. The control circuit controls the ON state of the power circuit according to signals input from either the AFE or the MPU, the control circuit is also provided with a startup terminal, and the control circuit switches the power circuit ON based on a signal from the startup terminal.

In the battery pack described above, the MPU does not directly control the power circuit, but rather switches the power circuit ON via the control circuit. Consequently, when supply power to the MPU is cut off and the MPU is in a shutdown state, the control circuit can switch the power circuit from OFF to ON in response to a startup signal from the startup terminal and this allows the shutdown MPU to be restored to an operational state. This battery pack can reduce unnecessary power consumption by the MPU by shutting it down. Specifically, when shutdown conditions met, the MPU can switch the power circuit OFF to reduce unnecessary power consumption by both the power circuit and the MPU. Furthermore, even when the MPU is in a non-operational state, the control circuit can switch the power circuit ON to restore the MPU to an operational state. Therefore, while unnecessary power consumption can be reduced with the MPU in a non-operational state, the MPU can still be restored from the non-operational state to an operational state for normal operation.

The battery pack for another embodiment of the present invention can use an AFE with an internal (embedded) control circuit.

In a battery pack with the circuit configuration described above, the power circuit can be controlled ON and OFF by the AFE with an internal (embedded) control circuit. Consequently, power supplied from the battery to the power circuit can be switched ON and OFF with a simple circuit configuration that does not require a dedicated control circuit. In this battery pack, the AFE with an embedded control circuit can shut down the MPU and reduce unnecessary power consumption. Specifically, when shutdown conditions are met, the control circuit embedded AFE can switch the power circuit OFF to reduce unnecessary power consumption by both the power circuit and the MPU. Further, even when the MPU is in a non-operational state, the control circuit embedded AFE can switch the power circuit ON to restore the MPU to an operational state. Accordingly, while minimizing unnecessary power consumption in a non-operational state, the MPU can transition from the non-operational state to an operational state for normal operation. Since a battery pack configured with a control circuit embedded AFE can control the power circuit ON and OFF, the power circuit can be switched ON and OFF with a simple circuit configuration that does not require a dedicated control circuit to control the power circuit. Namely, a battery pack that puts the MPU in a non-operational state when not supplying power to a load requires switching circuitry between the battery and the MPU power circuit to switch the power circuit from ON to OFF and suspend MPU operation. While the switching circuitry can be switched OFF when the MPU determines that power should be cut off, once power is cut off and the MPU is non-operational, the switching circuitry cannot be switched ON to restore operation. This issue can be resolved by providing a dedicated control circuit to control the MPU power circuit, but a dedicated control circuit increases circuit complexity, component cost, and manufacturing cost. The battery pack for the present invention with the previously described circuit configuration eliminates these drawbacks by using a simple circuit configuration that allows the MPU to be switched ON and OFF without a dedicated control circuit to control the power circuit.

The battery pack for another embodiment of the present invention is provided with, in addition to any of the foregoing embodiments, a power switch that switches the power circuit ON and OFF, and the control circuit can control the power switch to turn the power circuit ON and OFF. A battery pack with this circuit configuration can control the power supply path to the power circuit ON and OFF through the control circuit and the power switch, and this makes it possible to cut off the supply of power to the power circuit and the MPU.

The battery pack for another embodiment of the present invention has an AFE provided with a control circuit, and the control circuit in the AFE can control the power circuit ON and OFF. In this battery pack, since the control circuit embedded AFE controls the power circuit ON and OFF, the power circuit can be switched ON and OFF with a simple circuit configuration that does not require a dedicated control circuit to control the power circuit.

In the battery pack for another embodiment of the present invention, the control circuit can switch the power circuit OFF based on a signal from the MPU. In this battery pack, when the AFE switches the power switch OFF, switching can be implemented independently by MPU software control of the AFE without any affect from external signals.

In the battery pack for another embodiment of the present invention, the AFE can be shut down by a signal from the MPU, and the control circuit in the AFE can switch the power switch OFF. In this battery pack, an OFF signal from the shutdown AFE switches the power switch OFF to shut down the power circuit and the MPU. By shutting down the power circuit, MPU, and AFE, overall circuit power consumption can be reduced to realize an ultra-low power consumption mode.

In the battery pack for another embodiment of the present invention, the power switch can be provided with a main switching element connected between the battery and the power circuit and a control switching element that controls the ON/OFF state of the main switching element, and the control circuit can switch the main switching element ON and OFF via the control switching element. In this battery pack, the control circuit controls the control switching element ON and OFF to switch the main switching element ON and OFF. Accordingly, the power supply path to the power circuit can be turned ON and OFF and the supply of power to the power circuit and MPU can be cut off.

In the battery pack for another embodiment of the present invention, the battery is provided with, in addition to any of the foregoing embodiments, a plurality of battery cells connected in series, and the AFE can be provided with voltage detection circuitry to detect the voltage of each battery cell. In this battery pack, the AFE can detect the voltage of each battery cell and transmit that data to the MPU.

The battery pack for another embodiment of the present invention can further be provided with charging switching elements connected to the output side of the battery and a driver circuit that receives operating power from the power circuit and switches the charging switching elements ON and OFF according to control signals from the MPU. In this battery pack, the MPU can control the charging switching elements ON and OFF through the driver circuit.

In the battery pack for another embodiment of the present invention, the power circuit can be a stabilized power supply that outputs a constant regulated voltage. In this battery pack, the power circuit can output a regulated voltage.

In the battery pack for another embodiment of the present invention, MPU power consumption is greater than AFE power consumption. In this battery pack, unnecessary power consumption can be reduced by shutting down the high power consuming MPU to put the battery pack to an ultra-low power consumption mode that more effectively reduces power consumption.

In the battery pack for another embodiment of the present invention, the MPU stores a power-off state that switches the power circuit OFF, and the MPU can invoke the power-off state by switching the power circuit OFF. In this battery pack, the MPU can control transition of the battery pack to an ultra-low power consumption mode to reduce unnecessary power consumption at an intended time under specified conditions.

The following describes the present invention in detail with reference to the drawings. In the following descriptions, terms indicating specific directions or positions (e.g., "upper," "lower," and wording that include those terms) may be used as necessary. However, such terms are used to facilitate understanding of the invention with reference to the drawings and the technical scope of the invention is not limited by the meaning of those terms. Further, identical reference numbers appearing in multiple drawings indicate identical or equivalent parts or components. Additionally, embodiments described below are specific examples intended to illustrate technical concepts of the present invention and the present invention is not limited to those examples. Unless specifically stated otherwise, dimensions, materials, shapes, relative disposition, and other aspects of the components described below are merely illustrative and are not intended to limit the scope of the invention. Further, descriptions in one embodiment or example may also be applied to other embodiments or examples. Note that the size, positional relationships, and other characteristics of components shown in the drawings may be exaggerated for the purpose of clear explanation.

### EMBODIMENT 1

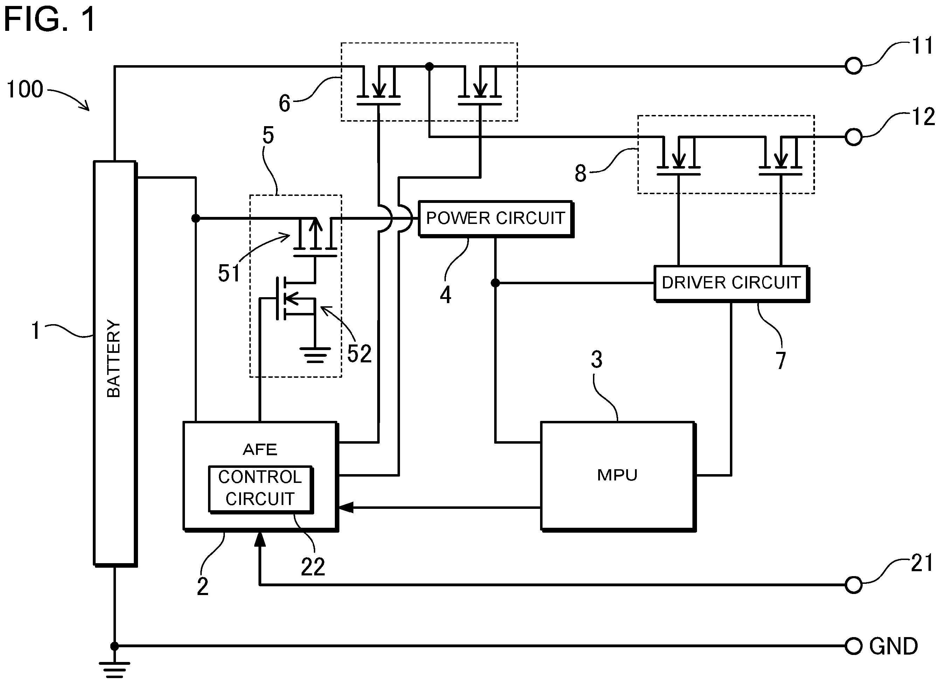

FIG. 1 shows a circuit diagram of the battery pack 100 for embodiment 1. The battery pack 100 shown in the circuit diagram of FIG. 1 is provided with a battery 1 made up of a plurality of rechargeable battery cells, an AFE 2 connected to the battery 1 to detect battery voltage, an MPU 3 connected to the AFE 2 via a communication line, a power circuit 4 that outputs battery voltage converted to MPU operating voltage, and a power switch 5 connected between the battery 1 and the power circuit 4 to input battery voltage to the power circuit 4.

The battery 1 is a plurality of battery cells connected in series and/or parallel. Any type of batteries that can be recharged, such as lithium-ion rechargeable batteries or all-solid-state batteries, can be used as the battery cells. The battery pack of the present invention is not limited to use of lithium-ion batteries and any rechargeable battery in which charge and discharge current can be controlled by detecting battery voltage and temperature can be used.

The battery 1 has the number of battery cells connected in series adjusted to set the output voltage to an optimal value for the intended application. In addition, the number of battery cells connected in parallel can be adjusted to set the maximum output current and the charge/discharge capacity of the battery pack appropriate for the application. The number of battery cells in the battery pack is not specified, but rather battery cells are connected in series or parallel to achieve a voltage and capacity optimal for the application.

### (AFE 2)

The AFE (Analog Front End) 2 detects the voltage and temperature of battery cells in the battery 1 and transmits that information to the MPU 3. Although not illustrated, the AFE is provided with voltage detection circuitry connected to each battery cell to detect individual battery cell voltages. An AFE that detects battery temperature has temperature sensors, which are thermally coupled with the battery, connected to temperature detection circuitry in the input-side of the AFE. The temperature sensor can be a thermistor or other element that changes electrical resistance depending on temperature. The temperature detection circuitry detects electrical resistance of the temperature sensor to determine battery temperature.

The AFE 2 shown in FIG. 1 has an embedded control circuit 22 that switches the power circuit 4 ON and OFF. Hence, the AFE 2 in the figure, which includes a control circuit 22, switches the power circuit 4 ON and OFF. The control circuit 22 switches the power circuit 4 ON and OFF according to signals input from either the AFE 2 or the MPU 3. When conditions for MPU 3 shutdown are met, the control circuit 22 switches the power circuit 4, which supplies power to the MPU 3, to the OFF state to shutdown the MPU 3. The control circuit 22 also includes a startup terminal 21, and the control circuit 22 switches the power circuit 4 ON based on a signal from the startup terminal 21. Accordingly, even when the MPU 3 is in a non-operational state, the AFE 2, which has an embedded control circuit 22, can switch the power circuit 4 to the ON state and restore the MPU 3 to an operational state.

The AFE 2 in FIG. 1 controls discharge switching elements 6 connected between the battery 1 and the discharge terminal 11. The discharge switching elements 6 are switching devices such as FETs (Field Effect Transistors), and the AFE 2 controls the gate voltage of the FETs to switch the discharge switching elements 6 ON and OFF. Switching elements 6 in the battery pack 100 of FIG. 1 are two FETs connected in series. If the AFE 2 determines that detected battery cell voltage has dropped to a discharge cut off voltage, it switches the discharge switching elements 6 from ON to OFF. Switching the discharge switching elements 6 from ON to OFF forcibly interrupts discharge current and prevents over-discharge of the battery 1. As shown in the circuit diagram of FIG. 1, the battery pack 100 has two FETs connected in series and thereby realizes a high degree of safety. Safety is further enhanced by simultaneous ON/OFF switching of both FETs. In normal operation, both FETs are switched ON and OFF simultaneously to appropriately control discharge current. If battery cell voltage drops to the discharge cut off voltage, the AFE 2 simultaneously switches both FETs from ON to OFF to cut off the discharge current.

An AFE 2 provided with a temperature detection circuit compares detected battery cell temperature with pre-stored temperature. If detected temperature values exceed or drop below the pre-stored temperature values, the AFE 2 switches the discharge switching elements 6 to the OFF state to suspend battery 1 discharge. Further, when detected battery 1 temperature exceeds or drops below the pre-stored temperature values, the AFE 2 can adjust the duty cycle of discharge switching element 6 ON/OFF switching to protect the battery 1 while continuing discharge.

Further, the battery pack 100 shown in the circuit diagram of FIG. 1 is provided with a discharge terminal 11 that is connected to the output side of the battery 1 through the discharge switching elements 6. As previously mentioned, the discharge switching elements 6 are two FETs connected in series, and preferably, the FETs are N-channel FETs. The battery pack 100 shown in the circuit diagram also has charging switching elements 8 connected between a charging terminal 12 and the connection node between the two discharge switching element 6 FETs. In a battery pack 100 with this circuit configuration, the charging switching elements 8 connect to the battery 1 through one of the discharge switching element 6 FETs. Current for charging the battery 1 flows through the parasitic diode (body diode) in one of the discharge switching element 6 FETs, and consequently the battery 1 can be charged even when the discharge switching elements 6 are in the OFF state. With the discharge switching elements 6 in the OFF state, charging current flows through the parasitic diode of only one of the FETs (i.e. not through the parasitic diodes of both series-connected FETs) to minimize parasitic diode voltage drop and permit efficient battery 1 charging. Further, charging current can be supplied to the battery 1 with the discharge switching element 6 FETs in the ON state, and this allows charging current to be efficiently supplied to the battery 1 through the low internal resistance of the ON state FET.

### (MPU 3)

The MPU (Micro-Processor Unit) 3 controls ON/OFF switching of the charging switching elements 8 through a driver circuit 7. The battery pack 100 shown in the circuit diagram of FIG. 1 controls the charging switching elements 8 ON and OFF through the driver circuit 7. The driver circuit 7 switches the charging switching elements 8 ON and OFF based on control signals from the MPU 3. The driver circuit 7 operates with power supplied from the power circuit 4 and controls the charging switching elements 8 ON and OFF according to signals from the MPU 3. When a battery charger is connected to the charging terminal 12 and the battery pack 100 is being charged, the power circuit 4 supplies operating power to the MPU 3 to make it operational. In the operational state, the MPU 3 computes voltage and remaining capacity of the battery 1 during charging via the AFE 2 and detects full charge. When full charge is detected, the MPU 3 outputs an OFF signal to the driver circuit 7 to switch OFF the charging switching elements 8. The driver circuit 7 detects the OFF signal from the MPU 3 and switches the charging switching element 8 FETs to the OFF state to cut off charging current to the battery 1.

Operating power is supplied to the MPU 3 and driver circuit 7 from the power circuit 4. The power circuit 4 is a stabilized power source that can supply stable output regulated to a constant voltage. For example, the power circuit can be a DC/DC converter, a linear regulator, or similar circuitry. A battery pack 100, in which the power circuit 4 supplies operating power to both the MPU 3 and the driver circuit 7, is characterized in that the MPU 3, the power circuit 4, and the driver circuit 7 do not consume power when the MPU 3 is in the shutdown state, and this has the advantage of effectively reducing unnecessary power consumption during shutdown. However, although not illustrated, the driver circuit can also operate using power supplied from a small-capacity power circuit embedded in the AFE instead of from a power circuit. In this patent specification, the shutdown state of the power circuit 4 and MPU 3 refers to a state in which the supply of operating power is cut off, and no power is consumed.

The battery pack 100 can reduce unnecessary power consumption in both the power circuit 4 and the MPU 3 by switching the power circuit 4 OFF. In the battery pack 100 of FIG. 1, the MPU 3 does not directly control the power circuit 4, but rather switches it ON and OFF via the control circuit 22 embedded in the AFE 2. When the supply of power to the MPU 3 is cut off and the MPU 3 is in the shutdown state, a startup signal from the startup terminal 21 causes the control circuit 22 to switch the power circuit 4 from OFF to ON allowing the MPU 3 to be restored to an operational state. Specifically, even when the MPU 3 is in a non-operational state, the control circuit 22 can switch the power circuit 4 to the ON state in response to a signal from the startup terminal 21 and restore the MPU 3 to an operational state. Consequently, while the MPU 3 can be kept in a non-operational state to reduce unnecessary power consumption, it can also be restored from the non-operational state to normal MPU operation.

The MPU 3 stores the power-off state where the power circuit 4 is switched OFF. In the power-off state stored in the MPU 3 in FIG. 1, the power circuit 4 is switched to the OFF state via the control circuit 22 embedded AFE 2 and the power switch 5. The MPU 3 stores shutdown conditions that trigger power circuit 4 shutdown by switching the power switch 5 from ON to OFF via the control circuit 22. In the operational state, the MPU 3 judges whether or not shutdown conditions are met with a given periodicity. When the MPU 3 judges that shutdown conditions are satisfied, it switches the power switch 5 to the OFF state via the control circuit 22 embedded AFE 2 and cuts off power supply from the battery 1 to the power circuit 4. When power circuit 4 operation is ceased, operating power is no longer supplied to the MPU 3 and the MPU 3 is shut down. The shutdown MPU 3 is not in an operational state and consequently cannot restart itself. MPU 3 restart is achieved by the AFE 2 switching the power switch 5 from OFF to ON to activate the power circuit 4 and restore MPU 3 operation. Shutdown conditions are the necessary conditions or states that invoke MPU 3 shutdown. For example, MPU 3 shutdown conditions can include prolonged inactivity of the battery pack, battery capacity below an allowable threshold, or uncertainty about future use at the time of initial shipping from the factory. The MPU 3 can enter a shutdown state not only in response to a low voltage condition, but also intentionally when the memory-stored shutdown conditions are met.

### (Power Switch 5)

MPU 3 shutdown is controlled by the power switch 5. The power switch 5 is controlled ON and OFF by the AFE 2. When the MPU 3 judges that shutdown conditions are met, it outputs a stop signal to the AFE 2, and the AFE 2 switches the power switch 5 from ON to OFF. The power switch 5 in FIG. 1 is provided with a main switching element 51 connected in the input path of the power circuit 4 and a control switching element 52 that controls the main switching element 51. By controlling the ON/OFF state of the control switching element 52, the AFE 2 can switch the main switching element 51 in the power supply line to the power circuit 4 ON and OFF, and can cut off the supply of power to the power circuit 4 and MPU 3.

The MPU 3 switches the power switch 5 to the OFF state via the AFE 2 to cut off power supplied from the battery 1 to the power circuit 4 and the MPU 3. Since the AFE 2 can control the power switch 5 based on communication from the MPU 3, the MPU 3 can intentionally control transition of the battery pack 100 into an ultra-low power consumption mode at a time that is not limited to a low voltage state. This allows the battery pack 100 to reduce unnecessary power consumption and avoid issues such as the battery reaching a state of deep discharge in a short period making it unusable for safety reasons, or battery non-compatibility with long-term storage. Accordingly, the time period prior to entering a state of deep battery discharge can be extended and long-term battery pack 100 storage can be realized.

By means of the control circuit 22 embedded AFE 2 and the power switch 5, The MPU 3 can shut down the power circuit 4 and the MPU 3 to reduce unnecessary power consumption. In addition, the MPU 3 can shut down the AFE 2. The MPU 3 outputs a stop signal to shut down the AFE 2, which contains the control circuit 22 that controls the power switch 5. When the AFE 2 shuts down, the signal output from the AFE 2 to the power switch 5 drops from "High" to "Low" and the power switch 5 is switched to the OFF state. This cuts off power supplied from the battery 1 to the power circuit 4, and thereby shuts down the MPU 3. This circuit configuration further reduces overall power consumption by shutting down the AFE 2, and can realize an ultra-low power consumption mode for the entire circuit.

Meanwhile, restarting the shut down MPU 3 to restore it to an operational state is a requirement. The AFE 2 is connected to a startup terminal 21 that inputs a startup signal to the AFE 2. When the AFE 2 detects input of a startup signal from the startup terminal 21, it switches the power switch 5 from OFF to ON.

The power switch 5 in the battery pack 100 in FIG. 1 is provided with a main switching element 51 and a control switching element 52. The main switching element 51 is connected between the battery 1 and the power circuit 4 and switches power supplied from the battery 1 to the power circuit 4 ON and OFF. The control switching element 52 controls the main switching element 51 ON and OFF. The power switch 5 in the figure has a main switching element 51 that is a P-channel FET and a control switching element 52 that is an N-channel FET. The main switching element 51 P-channel FET has its source connected to the positive side of the battery 1 and its drain connected to the power circuit 4. The control switching element 52 is connected between the gate of the main switching element 51 and ground. In this power switch 5, the main switching element 51 can be switched ON by putting the control switching element 52 in the ON state. The control switching element 52 is controlled ON and OFF by control signals input to the gate from the AFE 2.

The power switch 5 described above is switched from OFF to ON by a startup signal input to the AFE 2 from the startup terminal 21. The startup terminal 21 can be connected, for example, to a power source or to ground through a push-button switch. This circuit configuration can generate a "High" or "Low" startup signal by pressing the push-button. The control switching element 52 is switched to the ON state by the startup signal transmitted through the AFE 2 and that switches the main switching element 51 to the ON state to put the power circuit 4 in an operational state. The reactivated power circuit 4 supplies operating power to the MPU 3 and restores it from the shutdown state to an operational state.

As described above, the power switch 5, in which the main switching element 51 is a P-channel FET and the control switching element 52 is an N-channel FET, is controlled ON and OFF by the following procedure.
(1) When the control circuit 22 embedded AFE 2 receives a startup signal, it outputs a "High" ON signal to the gate of the N-channel FET control switching element 52.
(2) The control switching element 52 is switched to the ON state by the "High" ON signal input to its gate from the AFE 2.
(3) The ON state control switching element 52 connects the gate of the P-channel FET main switching element 51 to ground.
(4) Since the source of the P-channel FET main switching element 51 is connected to the positive side of the battery 1, the grounded gate biases the gate negative with respect to the source, and the main switching element 51 is switched to the ON state.
(5) The ON state main switching element 51 connects the battery 1 to the power circuit 4 putting the power circuit 4 in an operational state.
(6) The activated power circuit 4 supplies operating voltage to the MPU 3 putting it in an operational state.
(7) In the operating state, the MPU 3 judges whether or not the usage environment of the battery pack 100 meets conditions for shutting down the MPU 3.
(8) If the MPU 3 determines that shutdown conditions are met, it outputs a stop signal to the control circuit 22 embedded AFE 2.
(9) When the AFE 2 detects a stop signal, it outputs a "Low" OFF signal to the gate of the N-channel FET control switching element 52.
(10) The control switching element 52 is switched from ON to OFF.
(11) The OFF state control switching element 52 disconnects the gate of the P-channel FET main switching element 51 from ground switching the main switching element 51 to the OFF state.
(12) The OFF state main switching element 51 cuts off power supplied from the battery 1 to the power circuit 4 putting the power circuit 4 in a non-operational state.
(13) The non-operational power circuit 4 no longer supplies operating power to the MPU 3, and the MPU 3 shuts down reducing power consumption.
(14) The above operations (1) through (13) are performed repeatedly.

If a startup signal is input to the AFE 2 from the startup terminal 21 with the MPU 3 in the shutdown state, an ON signal is output to the control switching element 52 as described in (1), the ON state control switching element 52 switches the main switching element 51 to the ON state, and the power circuit 4 is activated restoring the MPU 3 to the operational state ((1)-(6)). Further, if the operational MPU 3 judges that shutdown conditions are met, the power circuit 4 and MPU 3 are shut down via the control circuit 22 embedded AFE 2 and the power switch 5, allowing unnecessary power consumption to be reduced. When the control circuit 22 that controls the power switch 5 receives a stop signal from the MPU 3, it shuts down the AFE 2 causing the signal output from the AFE 2 to the power switch 5 to transition from "High" to "Low." That switches the power switch 5 to the OFF state cutting off the supply of power from the battery 1 to the power circuit 4. A battery pack 100 with this circuit configuration can shut down the power circuit 4, the MPU 3, as well as the AFE 2 to reduce overall circuit power consumption and realize an ultra-low power consumption mode ((7)-(13)).

### EMBODIMENTS 2 and 3

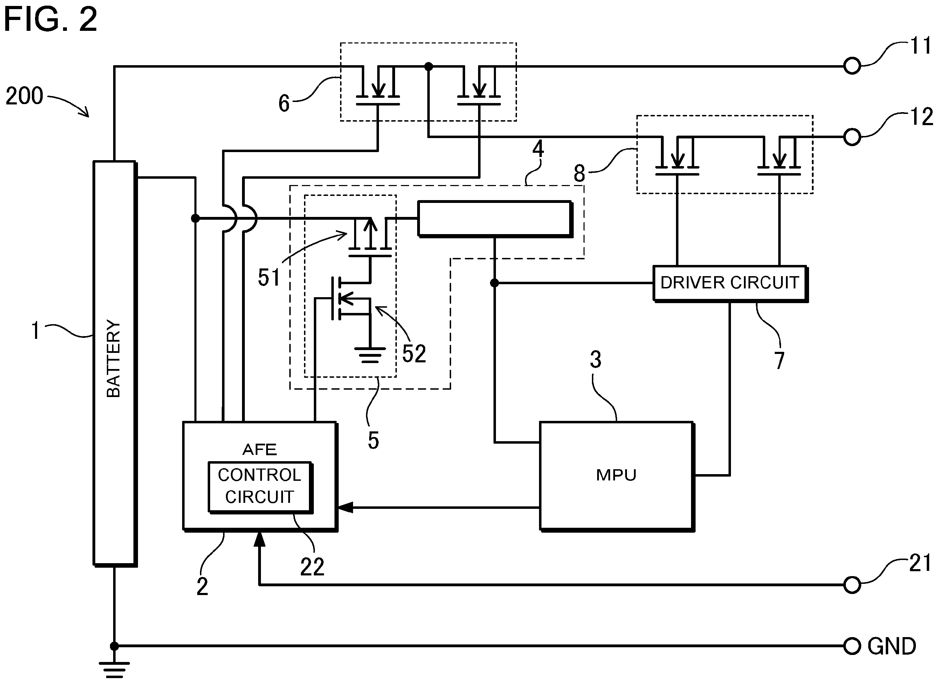

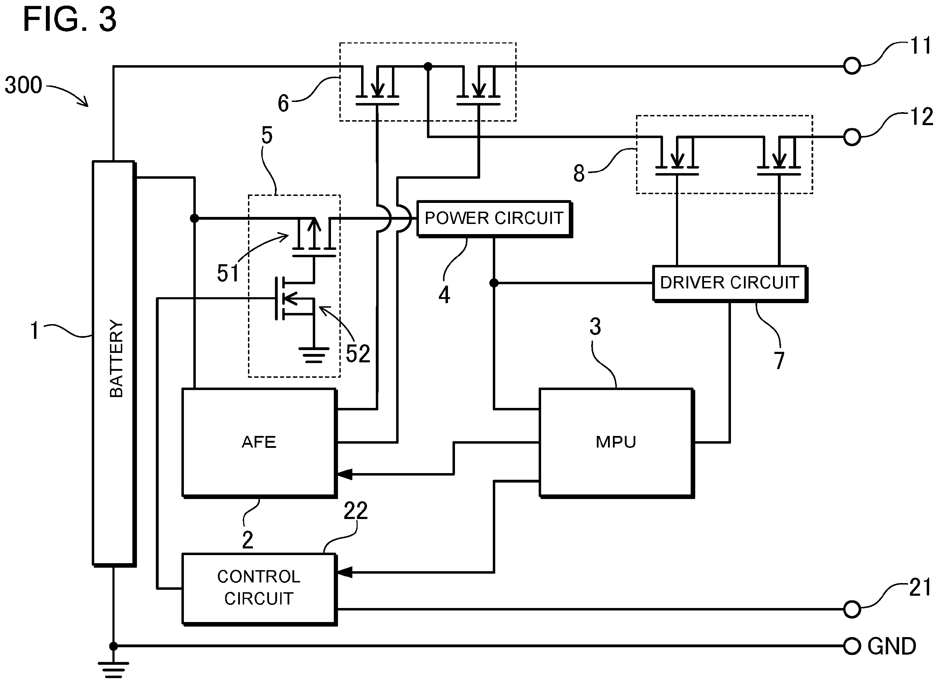

FIG. 2 shows a circuit diagram of the battery pack 200 for Embodiment 2, and FIG. 3 shows a circuit diagram of the battery pack 300 for Embodiment 3. The battery pack 100 in FIG. 1 is configured with a separate power switch 5 and power circuit 4. In contrast, the battery pack 200 in FIG. 2 has a circuit configuration in which the power circuit 4 is provided with an integrated power switch 5. Further, in the battery pack 100 in FIG. 1, the AFE 2, which contains the control circuit 22, controls ON and OFF switching of the power circuit 4. However, the battery pack 300 in FIG. 3 controls ON and OFF switching of the power circuit 4 with a dedicated control circuit 22 separate from the AFE 2. In this battery pack 300, the control circuit 22 switches the power switch 5 to the OFF state based on a signal from the MPU 3 and switches the power circuit 4 to the ON state in response to a signal from the startup terminal 21. The control circuit 22 in FIG. 3 can switch the power circuit 4 ON and OFF and operate in the same manner as the control circuit 22 embedded in the AFE 2 of FIG. 1.

### INDUSTRIAL APPLICABILITY

The present invention can be used effectively as a battery pack that can shut down the MPU to reduce unnecessary MPU power consumption while still permitting restoration of the MPU to the ON state.

### REFERENCE SIGNS LIST

- 100, 200, 300, 900: battery pack
- 1: battery
- 2: AFE (Analog Front End)
- 3: MPU (Micro-Processor Unit)
- 4: power circuit
- 5: power switch
- 6: discharge switching elements
- 7: driver circuit
- 8: charging switching elements
- 11: discharge terminal
- 12: charging terminal
- 21: startup terminal
- 22: control circuit
- 901: battery
- 902: AFE (Analog Front End)
- 903: MPU (Micro-Processor Unit)
- 904a: AFE power circuit
- 904b: MPU power circuit
- 905: power cut-off switch

## Claims

1. A battery pack comprising:
a rechargeable battery;
an AFE that detects battery voltage;
an MPU connected to the AFE;
a power circuit that outputs battery voltage converted to MPU operating voltage; and
a control circuit that switches the power circuit ON and OFF,
wherein the control circuit controls the ON state of the power circuit according to signals input from either the AFE or the MPU, the control circuit is further provided with a startup terminal, and the control circuit switches the power circuit ON based on a signal from the startup terminal.

2. The battery pack as recited in claim 1, wherein the AFE is provided with a control circuit.

3. The battery pack as recited in claim 1, further comprising a power switch that switches the power circuit ON and OFF, and the control circuit controls the power switch to turn the power circuit ON and OFF.

4. The battery pack as recited in claim 3, wherein the AFE is provided with a control circuit, and the control circuit in the AFE controls the power switch ON and OFF.

5. The battery pack as recited in claim 1, wherein the control circuit switches the power circuit OFF based on a signal from the MPU.

6. The battery pack as recited in claim 2, wherein the AFE is shut down by a signal from the MPU, and the control circuit in the AFE switches the power circuit OFF.

7. The battery pack as recited in claim 3 or 4, wherein the power switch is provided with a main switching element connected between the battery and the power circuit, and a control switching element that controls the ON/OFF state of the main switching element, wherein the control circuit switches the main switching element ON and OFF via the control switching element.

8. The battery pack as recited in claim 1, wherein the battery is provided with a plurality of battery cells connected in series, and the AFE is provided with voltage detection circuitry to detect the voltage of each battery cell.

9. The battery pack as recited in claim 1, further comprising charging switching elements connected to the output side of the battery, and a driver circuit that receives operating power from the power circuit and switches the charging switching elements ON and OFF based on control signals from the MPU.

10. The battery pack as recited in claim 1, wherein the power circuit is a stabilized power supply that outputs a constant regulated voltage.

11. The battery pack as recited in claim 1, wherein MPU power consumption is greater than AFE power consumption.

12. The battery pack as recited in claim 1, wherein the MPU stores a power-off state that switches the power circuit OFF, and the MPU can invoke the power-off state by switching the power circuit OFF.
